# EUROPÄISCHE PATENTANMELDUNG

(11) **EP 2 136 287 A1**
(43) Veröffentlichungstag der Anmeldung: **23.12.2009**
(21) Anmeldenummer: 08011182.6
(22) Anmeldetag: 19.06.2008
(51) Int. Cl.: G06F 3/023

(54) **Vorrichtung zur Eingabe von Eingabeelementen**

(71) Anmelder: Gigaset Communications GmbH, 81379 München (DE)
(72) Erfinder: Mari, Andreas, 81829 München (DE)
(74) Vertreter: Michalski Hüttermann & Partner Patentanwälte

(57) **Zusammenfassung**

Die Erfindung betrifft eine Vorrichtung zur Eingabe von Eingabeelementen in ein elektronisches Gerät mit einer Steuereinheit (1) mit fünf Schaltelementen zum Erzeugen von fünf Schaltzuständen (S1 bis S5), einer Auswerteeinheit (2) zum zeitlichen Auswerten der fünf Schaltzustände, und einer Zuordnungseinheit (3) zum Zuordnen der ausgewerteten Schaltzustände (SZ) einem vorbestimmten Eingabeelement (EE), wobei ein Schaltelement zentriert angeordnet ist und die weiteren vier Schaltelemente um das zentrierte Schaltelement gruppiert sind.

## Beschreibung

Die vorliegende Erfindung bezieht sich auf eine Vorrichtung zur Eingabe von Eingabeelementen in ein elektronisches Gerät und insbesondere auf eine Vorrichtung zur intuitiven Eingabe von Ziffern. Ferner betrifft die vorliegende Erfindung ein elektronisches Gerät mit einer derartigen Vorrichtung und insbesondere ein mobiles Telekommunikationsendgerät, ein PDA (Personal Digital Assistant) oder ähnliches.

Zur Bedienung einer Vielzahl von elektronischen Geräten ist die Eingabe verschiedenster Eingabeelemente, beispielsweise grafischer oder alphanumerischer Zeichen oder Befehle, unerlässlich. So sind z.B. beim Telefonieren die entsprechenden Ziffern einer gewünschten Telefonnummer in das Telefongerät einzugeben, was bei älteren Telefongeräten mittels einer Wählscheibe und bei moderneren Telefonen mittels eines Ziffernblocks erfolgt. Ein Problem, welches insbesondere moderne Telekommunikationsendgeräte, PDAs oder ähnliche sogenannte Hand-Held-Geräte betrifft, besteht darin, dass der Verbraucher eine immer stärkere Miniaturisierung der Geräte fordert. Gleichzeitig wird zur Gewährleistung einer guten Erkennbarkeit von ausgegebenen Informationen gewünscht, dass eine Anzeigeeinheit bzw. das Display der Geräte möglichst groß ist, so dass für eine Tastatur immer weniger Platz bleibt. Zudem bieten die Geräte einen immer größeren Funktionsumfang, wodurch die Anzahl der verschiedenen einzugebenden Zeichen oder Befehle steigt.

Zur Reduzierung des Platzbedarfs einer Tastatur werden teilweise sowohl die Tasten als auch der Tastenzwischenraum verkleinert, was jedoch die Bedienbarkeit erschwert. Bei anderen herkömmlichen Modellen ist die Tastatur als zu- bzw. wegklappbare Einheit ausgestaltet, wodurch aber lediglich die Abmessungen des Geräts in einem zusammengeklappten Zustand optimiert werden können, nicht aber der Platzbedarf insgesamt wesentlich reduziert wird. Weitere Möglichkeiten bestehen darin, die Tastenanzahl zu reduzieren, indem einige der Tasten mehrfach belegt sind. Ein Beispiel hierfür sind die an vielen mobilen Telefonen oder Mobilfunkgeräten inzwischen vorhandenen "Softkeys", welche sich in der Regel unterhalb des Displays bzw. der Anzeigeeinheit befinden und einer dort angezeigten Funktionalität zugeordnet sind. Diese können beispielsweise als Wipp-Tasten ausgestaltet sein, mit denen der Benutzer je nach Drücken auf der rechten oder linken Seite der Taste beispielsweise einen Cursor innerhalb eines auf dem Display dargestellten Menüs positionieren und dann gegebenenfalls über eine weitere Taste die Auswahl bestätigen kann. Der Benutzer kann so über mehrere Ebenen des Menüs zu den verschiedensten Befehlen gelangen und diese eingeben.

Ein weiteres Beispiel für eine Mehrfachbelegung von Tasten ist eine Vorrichtung, welche von vielen Telefongeräten zur Eingabe von Buchstaben beim Editieren von Telefonbucheinträgen, SMS usw. genutzt wird. Sobald sich das Gerät in einem entsprechenden Editiermodus befindet, steht jede Taste des Ziffernblocks für eine Mehrzahl von Zeichen, und der Benutzer wählt durch Mehrfachdruck das gewünschte Zeichen aus. Auch für derartige Eingabeverfahren wird aber in der Regel noch eine größere Anzahl von Tasten beispielsweise die bei Telefonen übliche 12er-Tastatur benötigt.

Bei neueren miniaturisierten Geräten, beispielsweise einem in einer Armbanduhr integrierten Telefon (auch Watch-Phone genannt), ist wegen des geringen zur Verfügung stehenden Platzes die Verwendung einer solchen Tastatur entweder gar nicht möglich oder äußerst unbequem.

Der Erfindung liegt daher die Aufgabe zugrunde, eine Vorrichtung zur Eingabe von Eingabeelementen zu schaffen, welche bei verringertem Platzbedarf einen erhöhten Benutzerkomfort ermöglicht.

Diese Aufgabe wird hinsichtlich der Vorrichtung durch die Merkmale des Patentanspruchs 1 und hinsichtlich des elektronischen Geräts durch die Merkmale des Patentanspruchs 12 gelöst.

Erfindungsgemäß erzeugt eine Steuereinheit mit fünf Schaltelementen fünf Schaltzustände, die von einer Auswerteeinheit zeitlich ausgewertet werden. Eine Zuordnungseinheit ordnet die ausgewerteten Schaltzustände einem vorbestimmten Eingabeelement zu, wobei die Schaltelemente derart angeordnet sind, dass ein Schaltelement zentriert angeordnet ist und die weiteren vier Schaltelemente um das zentrierte Schaltelement gruppiert sind. Durch die besondere Gruppierung in Kombination mit einer Mehrfachauswertung können somit bei minimalem Platzbedarf intuitiv und äußerst komfortabel Benutzereingaben durchgeführt werden.

Vorzugsweise werden die vier Schaltelemente äquidistant und insbesondere radialsymmetrisch um das zentrierte Schaltelement gruppiert. Auf diese Weise kann ein Benutzerkomfort und ein intuitives Eingabeverhalten weiter verbessert werden.

Die Auswerteeinheit realisiert insbesondere eine Doppelbelegung für die jeweiligen Schaltelemente, wobei die Doppelbelegung durch Auswertung entweder einer Anzahl von Schaltbetätigungen innerhalb eines vorbestimmten Zeitfensters oder durch Auswertung einer Zeitdauer einer Schaltbetätigung realisiert werden kann. Wiederum ergeben sich dadurch äußerst komfortable und intuitiv bedienbare Eingabemöglichkeiten.

Die Zuordnungseinheit ordnet den ausgewerteten Schaltzuständen vorzugsweise Ziffern zu, wodurch sich miniaturisierte Telefone mit erhöhtem Bedienkomfort realisieren lassen. Auf dem zentrierten Schaltelement ist hierbei vorzugsweise die Ziffer "0" und "9" zugeordnet, wodurch sich ein Bedienkomfort insbesondere bei Eingeben von Telefonnummern weiter verbessert.

Vorzugsweise ist die Steuereinheit als eine 4-Richtungs-Wipptaste mit zentralem Druckpunkt ausgestaltet. Alternativ kann die Steuereinheit jedoch auch einen Joy-Stick mit zentralem Druckpunkt oder ein Einzeltastenfeld mit zentral angeordneter Einzeltaste aufweisen. Insbesondere bei der 4-Richtungs-Wipptaste ergeben sich wesentliche Kostenvorteile, da derartige Tastschalter bereits in einer Vielzahl von Endgeräten zur Menüführung vorgesehen sind.

In weiteren Ansprüchen sind vorteilhafte Ausgestaltungen der Erfindung gekennzeichnet.

Die Erfindung wird nachstehend anhand von Ausführungsbeispielen unter Bezugnahme auf die Zeichnung näher beschrieben.

### Es zeigen:

- Figur 1: eine vereinfachte Blockdarstellung zur Veranschaulichung einer erfindungsgemäßen Vorrichtung zur Eingabe von Eingabeelementen;
- Figur 2: eine in der Zuordnungseinheit gemäß Figur 1 verwendete Zuordnungstabelle gemäß einem ersten Ausführungsbeispiel;
- Figur 3: eine in der Zuordnungseinheit gemäß Figur 1 verwendete Zuordnungstabelle gemäß einem zweiten Ausführungsbeispiel;
- Figur 4: eine vereinfachte Darstellung einer 4-Richtungs-Wipptaste als Steuereinheit gemäß Figur 1;
- Figur 5: eine vereinfachte Darstellung eines Joy-Sticks als Steuereinheit gemäß Figur 1; und
- Figur 6: eine vereinfachte Darstellung eines Einzeltastenfeldes als Steuereinheit gemäß Figur 1.

Die vorliegende Erfindung wird nachfolgend beispielhaft anhand eines Schnurlostelefons gemäß DECT-Standard (Digital European Cordless Telecommunications) oder dem CAT-iq (Cordless Advanced Technology - internet and quality) als elektronisches Gerät beschrieben, welches eine besonders platzsparende und intuitiv bedienbare Eingabevorrichtung aufweist. Selbstverständlich kann die Erfindung in gleicher Weise auch auf weitere elektronische Geräte wie beispielsweise Mobiltelefone, PDAs (Personal Digital Assistant), Smartphones oder sonstige Geräte angewendet werden, in denen eine Minaturisierung einer Eingabevorrichtung sowie leichte Bedienbarkeit von Bedeutung ist.

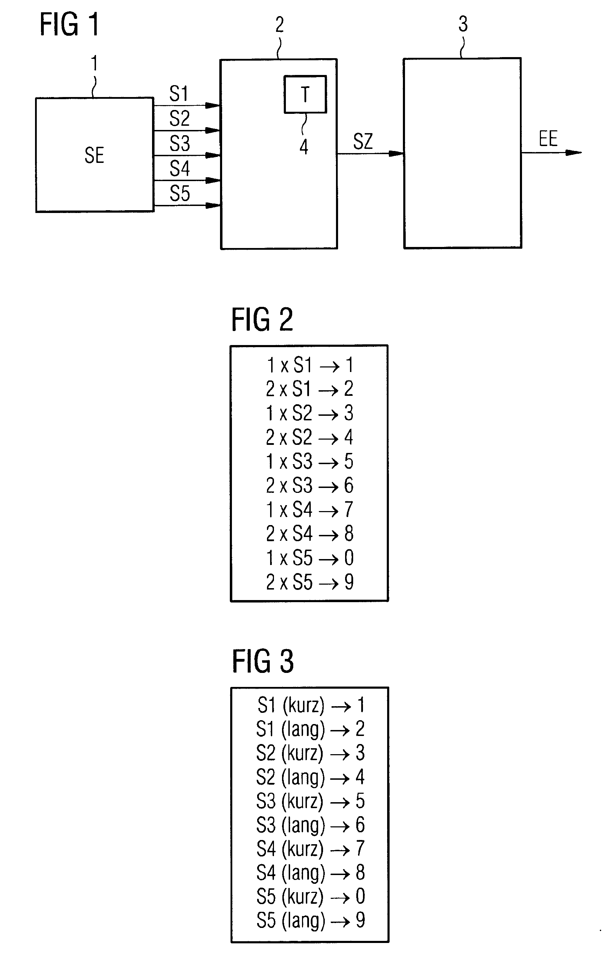

Figur 1 zeigt eine vereinfachte Blockdarstellung einer Vorrichtung zur Eingabe von Eingabeelementen gemäß der vorliegenden Erfindung, wobei eine Steuereinheit 1 genau fünf Schaltelemente aufweist, die jeweils einen zugehörigen Schaltzustand S1 bis S5 erzeugen können. Eine Auswerteeinheit 2 dient dem zeitlichen Auswerten dieser fünf Schaltzustände S1 bis S5, weshalb mit 4 eine Zeitgebereinheit angedeutet ist, welche die für die zeitliche Auswertung erforderlichen Zeitsignale zur Verfügung stellt. Die Zeitgebereinheit 4 ist beispielsweise eine Einheit, welche eine Auswertung im Millisekundenbereich ermöglicht.

Die in der Auswerteeinheit 2 erzeugten ausgewerteten Schaltzustände SZ werden ferner einer Zuordnungseinheit 3 zugeführt, welche den ausgewerteten Schaltzuständen SZ ein vorbestimmtes Eingabeelement EE zuordnet. Vorzugsweise erfolgt diese Zuordnung über eine Zuordnungstabelle, wie sie beispielhaft in Figuren 2 und 3 dargestellt ist.

Gemäß einem bevorzugten Ausführungsbeispiel der vorliegenden Erfindung kann die Auswerteeinheit 2 eine Doppelbelegung für ein jeweiliges Schaltelement bzw. für eine jeweilige Taste der Steuereinheit 1 realisieren, wodurch sich für einen zugehörigen Druckpunkt eine Doppelbelegung ergibt und sich bei fünf Schaltelementen die zehn Ziffern "0" bis "9" realisieren lassen. Selbstverständlich können auch andere Eingabeelemente EE als die bevorzugten Ziffern "0" bis "9" realisiert werden, wobei insbesondere auf all die in jeweiligen Ländern verwendeten Buchstaben mit Sonderzeichen verwiesen wird.

Da es sich jedoch vorzugsweise um eine Eingabevorrichtung für Telekommunikationsendgeräte handelt und hierbei mit minimalem Platzbedarf insbesondere für die Eingabe von Telefonnummern eine Zifferneingabe erforderlich ist, wird die Erfindung im Weiteren anhand von Ziffern als Eingabeelementen EE beschrieben.

Gemäß Figur 1 kann gemäß einem Ausführungsbeispiel die Auswerteeinheit eine Anzahl von Schaltbetätigungen innerhalb eines vorbestimmten Zeitfensters auswerten und einen entsprechend ausgewerteten Schaltzustand SZ ausgeben. Hierbei wird beispielsweise innerhalb des vorbestimmten Zeitfensters, welches beispielsweise 0,5 Sekunden umfasst, eine Anzahl von Schaltbetätigungen für ein jeweiliges Schaltelement erfasst und ausgewertet. Zur Realisierung einer Doppelbelegung wird beispielsweise einer einmaligen Schaltbetätigung eines ersten Schaltelements der ausgewertete Schaltzustand SZ = 1 x S1 zugewiesen. Wird demgegenüber der erste Schalter innerhalb des vorbestimmten Zeitfensters von 0,5 Sekunden zweimal betätigt, so kann der ausgewertete Schaltzustand SZ = 2 x S1 betragen.

In gleicher Weise werden auch die weiteren Schaltzustände der weiteren Schaltelemente ausgewertet, um einen zugehörigen ausgewerteten Schaltzustand SZ zu erzeugen. Selbstverständlich kann das vorbestimmte Zeitfenster, innerhalb der eine Anzahl von Schaltbetätigungen erfasst wird, auch größer oder kleiner sein, wobei insbesondere ein Bereich von 0,3 bis 1 Sekunde für den Benutzer einen optimalen Kompromiss zwischen schneller Eingabemöglichkeit und ausreichendem Benutzerkomfort bietet. Vorzugsweise kann das vorbestimmte Zeitfenster hinsichtlich seiner Zeitdauer vom Benutzer an seine Bedürfnisse angepasst und variabel eingestellt werden, wodurch sich ein Benutzerkomfort weiter verbessert.

Figur 2 zeigt eine vereinfachte Darstellung einer Zuordnungstabelle, wie sie in der Zuordnungseinheit 3 bei dem vorstehend genannten Ausführungsbeispiel verwendet werden kann. Gemäß Figur 2 sind hierbei in der linken Spalte die jeweiligen von der Auswerteeinheit 2 ausgewerteten Schaltzustände SZ dargestellt, welche den in der rechten Spalte dargestellten Ziffern bzw. Eingabeelementen EE zugeordnet werden. Demzufolge kann gemäß Figur 2 eine innerhalb des Zeitfensters einmalige Schaltbetätigung des ersten Schaltelements eine Ziffer "1" als Eingabeelement EE erzeugen. Eine zweimalige Betätigung des ersten Schalters ergibt durch die Zuordnungstabelle gemäß Figur 2 die Ziffer "2" als Eingabeelement EE. Die einmalige Betätigung des zweiten Schalters innerhalb des vorbestimmten Zeitfensters ergibt dann gemäß Figur 2 die Ziffer 3 usw. Auf diese Weise kann mit lediglich fünf Schaltelementen der komplette Ziffernsatz von "0" bis "9" realisiert werden, wobei eine Eingabe weiterhin sehr komfortabel ist.

Gemäß einem weiteren Ausführungsbeispiel kann in der Auswerteeinheit 2 auch eine Zeitdauer einer Schaltbetätigung zum Erzeugen eines ausgewerteten Schaltzustands ausgewertet werden. Bei der Auswertung einer Zeitdauer wird somit nicht eine Anzahl von Tastendrücken sondern vielmehr eine Zeitdauer ausgewertet, in der ein jeweiliges Schaltelement geschlossen oder geöffnet wird. Bei der hierin beschriebenen Doppelbelegung von Schaltelementen kann beispielsweise zwischen einem kurzen und langen Betätigen eines Schaltelements unterschieden werden. Hierbei kann in der Auswerteeinheit 2 mittels der Zeitgebereinheit 4 ein Zeit-Schwellwert festgelegt werden, der eine kurze Zeitdauer von einer langen Zeitdauer trennt. Vorzugsweise wird der Schwellwert auf 1,2 Sekunden festgelegt, wobei auch andere Schwellwerte verwendet werden können. Vorzugsweise kann der Schwellwert in einem Bereich von 0,5 bis 2 Sekunden liegen, wobei eine Schaltbetätigung, welche unterhalb des Zeit-Schwellwerts liegt, als kurze Schaltbetätigung und eine Schaltbetätigung, die über dem Zeit-Schwellwert liegt, als lange Schaltbetätigung von der Auswerteeinheit 2 interpretiert bzw. ausgewertet werden.

Figur 3 zeigt eine vereinfachte Darstellung einer Zuordnungstabelle, wie sie in der Zuordnungseinheit 3 für diesen Fall verwendet werden kann. Gemäß Figur 3 wird demzufolge ein in der Auswerteeinheit 2 als kurze Schaltbetätigung des ersten Schalters ausgewerteter Schaltzustand SZ = S1(kurz) der Ziffer "1" als Eingabeelement zugeordnet. Ferner kann der langen Schaltbetätigung des ersten Schaltelements den ausgewerteten Schaltzustand SZ = S1(lang) erzeugen, der gemäß Figur 3 in der Zuordnungseinheit 3 der Ziffer "2" zugeordnet wird. Eine kurze Schaltbetätigung des zweiten Schalters wird demzufolge als ausgewerteter Schaltzustand SZ = S2(kurz) ausgewertet und der Ziffer "3" zugeordnet usw. Wiederum lässt sich der vollständige Ziffernsatz durch lediglich fünf Schaltelemente realisieren, sofern die Auswerteeinheit 2 eine Auswertung hinsichtlich einer Doppelbelegung realisiert. Wiederum kann auch der Zeit-Schwellwert für den Benutzer frei einstellbar sein, um ihn an seine Bedürfnisse optimal anzupassen.

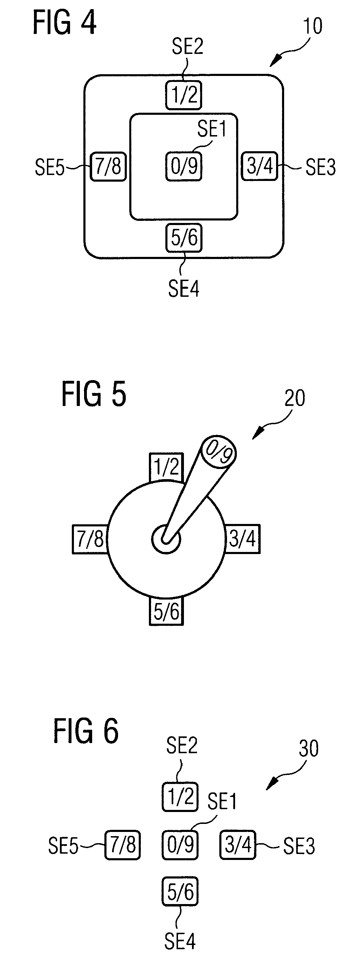

Figuren 4 bis 5 zeigen vereinfachte Ansichten von Steuereinheiten gemäß der vorliegenden Erfindung, wie sie beispielhaft verwendet werden können.

Gemäß Figur 4 kann die Steuereinheit 1 eine 4-Richtungs-Wipptaste 10 mit einem zentralen Druckpunkt bzw. einer sogenannten "Center-Klick"-Funktion umfassen. Bei derartigen Wipptasten handelt es sich mittlerweile um Standardelemente insbesondere für Telekommunikationsendgeräte, weshalb sich die Kosten wesentlich reduzieren. Gemäß Figur 4 werden demzufolge die fünf Schaltelemente der Steuereinheit 1 derart gruppiert, dass ein Schaltelement SE1 zentriert angeordnet ist und die weiteren vier Schaltelemente S2 bis S5 um das zentrierte Schaltelement SE1 gruppiert sind. Insbesondere können die um das zentrierte Schaltelement SE1 herum angeordneten weiteren vier Schaltelemente S2 bis S5 äquidistant, d.h. mit gleichem Abstand vom zentrierten Schaltelement SE1 gruppiert werden. Vorzugsweise können die äußeren vier Schaltelemente radialsymmetrisch um das zentrale Schaltelement SE1 gruppiert werden, wodurch sich eine besonders einfache und intuitive Bedienung ermöglichen lässt. Die Auswerteeinheit 2 kann hierbei dem zentrierten Schaltelement SE1 die Ziffernkombination "0" und "9" zuordnen, während dem darüber liegenden Schaltelement SE2 die Ziffernkombination "1" und "2", dem rechts neben dem zentrierten Schaltelement SE3 die Ziffernkombination "3" und "4", dem unter dem zentrierten Schaltelement liegenden Schaltelement SE4 die Ziffernkombination "5" und "6" sowie dem links vom zentrierten Schaltelement SE1 liegenden Schaltelement SE5 die Ziffernkombination "7" und "8" zugewiesen wird. Diese spezielle Zuordnung in Verbindung mit der erfindungsgemäßen Doppelbelegung und der besonderen Anordnung der Schaltelemente ermöglicht selbst bei stark miniaturisierten elektronischen Geräten eine ergonomisch optimierte Eingabevorrichtung. Die Eingabe insbesondere von Ziffern ist für einen Benutzer dadurch zuverlässig möglich und intuitiv erlernbar.

Somit können mit der 4-Richtungs-Wipptaste 10 mit zentralem Druckpunkt auf kleinstem Raum alle 10 Ziffern durch den Benutzer einfach und komfortabel ausgewählt werden. Bei der in Figur 4 dargestellten Gruppierung der Schaltelemente und entsprechenden Zuordnung von Ziffern ergibt sich für einen Benutzer bereits nach kurzer Eingewöhnungszeit eine äußerst komfortable Eingabe von Telefonnummern, wie sie insbesondere für miniaturisierte Telekommunikationsendgeräte notwendig ist. Die Gruppierung erfolgt somit im Hinblick auf ein weit verbreitetes Standardelement, wodurch sich ein optimaler Kompromiss zwischen Effizienz der Eingabe und Reduktion eines Flächenbedarfs für die Schaltelemente ergibt.

Figur 5 zeigt eine vereinfachte Ansicht einer Steuereinheit gemäß einem weiteren Ausführungsbeispiel, wobei alternativ zur in Figur 4 dargestellten Wipptaste 10 auch ein sogenannter Joy-Stick 20 mit zentralen Druckpunkt verwendet werden kann. Wiederum sind die Schaltelemente, wie in Figur 4 dargestellt, entsprechend gruppiert und jeweiligen Ziffern-Kombinationen zugeordnet, wodurch eine einfache und intuitiv erlernbare Zifferneingabe bereitgestellt wird. Durch Verschwenken bzw. Verkippen des Joy-Sticks 20 kann hierbei zwischen den radial um das Zentrum des Joy-Sticks angeordneten Schaltelementen ausgewählt werden und in gleicher Weise eine Schaltbetätigung der jeweiligen Schaltelemente mit zugehöriger Auswertung durchgeführt werden. Als fünftes Schaltelement kann beispielsweise ein Drücken auf den Joy-Stick die "Center-Klick"-Funktion realisieren, welche vorzugsweise wiederum den Ziffern "0" und "9" zugeordnet wird. Die Zuordnung der Ziffern entspricht vorzugsweise wiederum der in Figur 4 dargestellten Zuordnung.

Gemäß Figur 6 ist eine weitere vereinfachte Ansicht einer Steuereinheit gemäß einem weiteren Ausführungsbeispiel dargestellt, wobei alternativ zu den Figuren 4 und 5 auch ein Einzeltastenfeld 30, bestehend aus fünf Einzeltasten SE1 bis SE5 (mit einer zentrierten Einzeltaste SE1), entsprechend der Erfindung gruppiert werden kann. Vorzugsweise wird wiederum die zentrierte Einzeltaste SE1 den Ziffern "0" und "9" zugeordnet, die Einzeltaste bzw. das Schaltelement SE2 oberhalb davon angeordnet und den Ziffern "1" und "2" zugeordnet, das Schaltelement bzw. die Einzeltaste SE3 rechts vom zentrierten Schaltelement angeordnet und den Ziffern "3" und "4" zugeordnet. Die vierte Einzeltaste bzw. das vierte Schaltelement SE4 liegt vorzugsweise unterhalb des zentrierten Schaltelements und ist den Ziffern "5" und "6" zugeordnet und das fünfte Schaltelement bzw. die fünfte Einzeltaste SE5 ist links vom zentrierten Schaltelement angeordnet und den Ziffern "7" und "8" zugeordnet. Durch diese kreuzförmige Anordnung der Einzeltasten kann wiederum eine sehr platzsparende Eingabevorrichtung realisiert werden, welche insbesondere einfach und intuitiv bedienbar ist.

Die vorliegende Erfindung wurde vorstehend anhand von bevorzugten Steuereinheiten beschrieben. Sie ist jedoch nicht darauf beschränkt, sondern umfasst in gleicher Weise auch weitere Steuereinheiten mit entsprechender Gruppierung von Schaltelementen und entsprechender Zuordnung von Eingabeelementen. In gleicher Weise wurde die Erfindung anhand von Ziffern als Eingabeelement beschrieben. Sie ist jedoch nicht darauf beschränkt und umfasst in gleicher Weise auch andere Buchstaben oder Sonderzeichen, welche der speziellen Gruppierung von Schaltelementen zugeordnet wird. Ferner wurde die Erfindung mittels einer bestimmten Ziffern-Schaltelement-Zuordnung beschrieben, wobei dem zentrierten Schaltelement die ZiffernKombination "0/9" zugewiesen ist. Sie ist jedoch nicht darauf beschränkt und kann auch andere Ziffern-Schaltelement-Zuordnungen umfassen.

Bezugszeichenliste:
- 1: Steuereinheit
- 2: Auswerteeinheit
- 3: Zuordnungseinheit
- 4: Zeitgebereinheit
- SE1 bis SE5: Schaltelement
- S1 bis S5: Schaltzustand
- SZ: ausgewerteter Schaltzustand
- EE: Eingabeelement
- 10: Wipptaste
- 20: Joy-Stick
- 30: Einzeltastenfeld

## Patentansprüche

1. Vorrichtung zur Eingabe von Eingabeelementen in ein elektronisches Gerät mit:
einer Steuereinheit (1) mit fünf Schaltelementen (SE1 bis SE5) zum Erzeugen von fünf Schaltzuständen (S1 bis S5);
einer Auswerteeinheit (2) zum zeitlichen Auswerten der fünf Schaltzustände;
einer Zuordnungseinheit (3) zum Zuordnen der ausgewerteten Schaltzustände (SZ) einem vorbestimmten Eingabeelement (EE), wobei
ein Schaltelement (SE1) zentriert angeordnet ist und die weiteren vier Schaltelemente (SE2 bis SE5) um das zentrierte Schaltelement (SE1) gruppiert sind.

2. Vorrichtung nach Patentanspruch 1, wobei die weiteren vier Schaltelemente (SE2 bis SE5) äquidistant um das zentrierte Schaltelement gruppiert sind.

3. Vorrichtung nach Patentanspruch 1 oder 2, wobei die weiteren vier Schaltelemente radialsymmetrisch um das zentrierte Schaltelement (SE1) gruppiert sind.

4. Vorrichtung nach einem der Patentansprüche 1 bis 3, wobei die Auswerteeinheit (2) eine Doppelbelegung für die Schaltelemente (SE1 bis SE5) realisiert.

5. Vorrichtung nach Patentanspruch 5, wobei die Auswerteeinheit (2) die Doppelbelegung durch Auswertung einer Anzahl von Schaltbetätigungen innerhalb eines vorbestimmten Zeitfensters realisiert.

6. Vorrichtung nach Patentanspruch 5, wobei die Auswerteeinheit (2) die Doppelbelegung durch Auswertung einer Zeitdauer einer Schaltbetätigung realisiert.

7. Vorrichtung nach einem der Patentansprüche 4 bis 6, wobei die Zuordnungseinheit (3) den ausgewerteten Schaltzuständen (SZ) Ziffern zuordnet.

8. Vorrichtung nach Patentanspruch 7, wobei die Zuordnungseinheit (3) den dem zentralen Schaltelement (SE1) zugeordneten Schaltzuständen die Ziffern "0" und "9" zuordnet.

9. Vorrichtung nach einem der Patentansprüche 1 bis 8, wobei die Steuereinheit eine 4-Richtungs-Wdipptaste (10) mit zentralem Druckpunkt aufweist.

10. Vorrichtung nach einem der Patentansprüche 1 bis 8, wobei die Steuereinheit einen Joy-Stick (20) mit zentralem Druckpunkt aufweist.

11. Vorrichtung nach einem der Patentansprüche 1 bis 8, wobei die Steuereinheit ein Einzeltastenfeld (30) mit zentraler Einzeltaste (SE1) aufweist.

12. Elektronisches Gerät mit einer Vorrichtung gemäß einem der Patentansprüche 1 bis 11.
